# EUROPÄISCHE PATENTSCHRIFT

(11) **EP 4 056 304 B1**
(45) Veröffentlichungstag und Bekanntmachung des Hinweises auf die Patenterteilung: **07.05.2025**
(21) Anmeldenummer: 21161913.5
(22) Anmeldetag: 11.03.2021
(51) Int. Cl.: B23B 51/02, B23B 51/08, B23D 77/00

(54) **BOHRWERKZEUG**
BORING TOOL
OUTIL DE FORAGE

(43) Veröffentlichungstag der Anmeldung: 14.09.2022
(73) Patentinhaber: CERATIZIT Balzheim GmbH & Co. KG, 88481 Balzheim (DE)
(72) Erfinder: WALCHER, Rainer, 88481 Balzheim (DE); LUIBRAND, Peter, 88481 Balzheim (DE); RAPP, Oliver, 88481 Balzheim (DE)
(74) Vertreter: Ciesla, Dirk

(56) Entgegenhaltungen:
- EP-A1- 0 901 860
- DE-A1- 10 144 241
- DE-A1- 102012 002 050

## Beschreibung

Die vorliegende Erfindung betrifft ein Bohrwerkzeug mit den Merkmalen des Oberbegriffs von Anspruch 1.

Gattungsgemäße Bohrwerkzeuge weisen einen Schaftabschnitt und einen Schneidenabschnitt auf. Der Schneidenabschnitt trägt in der Regel zwei wendelförmige Spannuten, die zum Abtransport von Spänen dienen. Eine Zuführung von Kühl- und Schmiermitteln kann insbesondere über Kühlkanäle erfolgen, welche in einem Schneidrücken des Werkzeugs verlaufen.

Zwischen Spannuten liegt jeweils ein Steg, dessen Mantelfläche den Schneidrücken bildet.

Bohrwerkzeuge weisen in der Regel zwei Hauptschneiden auf, die an einer Stirn des Werkzeugs ausgebildet sind. An den Stegen sind Umfangsschneiden ausgebildet.

Die Belastungen auf die Hauptschneiden und das Schneideneck sind insbesondere bei der Bearbeitung von harten, abrasiven Werkstoffen, wie beispielsweise Eisengusswerkstoffen, sehr groß.

Es gibt Ansätze im Stand der Technik, Belastungen auf die Hauptschneide dadurch zu verringern, indem die Hauptschneide durch einen gekrümmten Verlauf verlängert wird. Auch bewirkt ein kleiner Spitzenwinkel längere Hauptschneiden als ein großer Spitzenwinkel.

Die EP1622735 B1 zeigt ein Bohrwerkzeug zur Zerspanung von Gusswerkstoffen, wobei eine Hauptschneide vom Schneideneck ausgehend in einer Axialrichtung zumindest abschnittsweise stetig konvex ist. Die damit erzielte Verlängerung der Hauptschneide führt zu einer Reduzierung der Last pro Hauptschneidenlängeneinheit und somit zu einer robusten Hauptschneide.

Die DE102012002050 (A1) zeigt ein Bohrwerkzeug gemäß dem Oberbegriff des Anspruchs 1: mit einer ersten Fase an der Umfangsschneide auf einem ersten Durchmesser und auf dem Schneidrücken eine bezüglich der Drehrichtung nach der ersten Fase den Bohrdurchmesser festlegende, gegenüber der ersten Fase um einen Winkel versetzte Führungsfase.

Die DE10144241 (A1) zeigt einen Bohrer mit einer Bohrnebenschneidkante mit rundgeschliffener Bohrfase. Am Rücken darauf folgend sind rundgeschliffene Reibfasen ausgebildet.

Aufgabe der vorliegenden Erfindung ist es, ein verbessertes Bohrwerkzeug anzugeben, insbesondere eine verbessertes Bohrwerkzeug zur Bearbeitung von Gusswerkstoffen. Insbesondere ist die Erfindung auf ein Bohrwerkzeug zur Bearbeitung verschleißfördernder Werkstoffe, insbesondere zur Bearbeitung von Eisengusswerkstoffen gerichtet.

Die Aufgabe wird gelöst durch ein Bohrwerkzeug mit den Merkmalen von Anspruch 1. Bevorzugte Weiterbildungen sind in den abhängigen Ansprüchen angelegt.

Indem das Bohrwerkzeug die Merkmale von Anspruch 1 aufweist, ist ein Bohrwerkzeug mit verbesserter Standzeit, guter Führung und geringer Reibung geschaffen.

Die Hauptschneide erstreckt sich radial nicht bis zum Bohrdurchmesser, sondern geht entlang eines Übergangsbereiches in die Umfangsschneide über. An der Umfangsschneide ist eine erste Fase an einem ersten Durchmesser ausgebildet, welcher erste Durchmesser kleiner als der Bohrdurchmesser ist. Die Fase an der Umfangsschneide ist mit einem Freiwinkelschliff ausgebildet. Es besteht also ein definierter Freiwinkel an dieser ersten Fase. Besonders vorteilhaft an der Ausprägung der Umfangsschneide mit Freiwinkel gegenüber einer Gestaltung als Rundschliff ist es, dass die Umfangsschneide schneidend wirkt und wenig Reibung und damit wenig Kraft erzeugt.

Somit wirkt die Umfangsschneide mit der daran ausgebildeten ersten Fase als Vorschneider auf einen ersten Durchmesser, der noch nicht dem Bohrdurchmesser entspricht, also kleiner als dieser ist. Erst die Führungsfase mit Rundschliff am Schneidrücken schneidet die Bohrungswandung auf den Bohrdurchmesser. In anderen Worten ist der zylindrische Rücken der Führungsfase am Bohrdurchmesser. Erst die Führungsfase am Schneidrücken legt den Bohrdurchmesser fest.

Damit wird die Hauptschneide und insbesondere die Schneidecke, also der Übergang der Hauptschneide in eine Umfangsschneide, deutlich entlastet. Denn insbesondere beim Übergang von Hauptschneiden zu Umfangsschneiden überlagern sich die Lasten aus der Zerspanung an einem Bohrungsgrund und an einer Bohrungswandung. Beim erfindungsgemäßen Bohrwerkzeug sind die Belastungen zumindest teilweise entkoppelt und örtlich verteilt.

Beim erfindungsgemäßen Bohrwerkzeug muss die Hauptschneide, nach dem Übergang von der Stirn des Bohrwerkzeugs in den sogenannten Durchmesser-Bereich, nicht auch noch die Bohrungswandung auf den Bohrdurchmesser schneiden. Das übernehmen dann die Führungsfasen an den Schneidrücken.

Die Führungsfase ist gegenüber der ersten Fase um einen Winkel von 20° bis 40° versetzt angeordnet. Bei einer Betrachtung eines Querschnitts folgt also am Schneidrücken der ersten Fase bezüglich der Drehrichtung nach 20° bis 40° die Führungsfase. Insbesondere ist die Führungsfase gegenüber der ersten Fase um einen Winkel von 30°±5°, weiter bevorzugt um einen Winkel von 30°±2° versetzt angeordnet. Dieser Versatz ist nah genug für ein unmittelbares Nachschneiden auf den Bohrdurchmesser und auch nah genug für eine wirksame Abstützung des Bohrwerkzeugs. Das Werkzeug ist nur über einen relativ kleinen Winkelbereich ungestützt. Eine Führung nahe an der Umfangsschneide verhindert ein Rattern.

Gleichzeitig ist der Führungsfase ausreichend beabstandet, um eine ausreichend große Hilfsspannut für die an der Führungsfase anfallenden Späne ausbilden zu können.

Bezüglich einer vorgesehenen Drehrichtung des Bohrwerkzeugs vor der Führungsfase ist eine Hilfsspannut ausgebildet. Die Hilfsspannut ist eine radiale Vertiefung, welche vor der Führungsfase in den Schneidrücken geformt ist und zusätzlichen Spanraum schafft. Dieser zusätzliche Spanraum vor der Führungsfase ist besonders hilfreich zur Abfuhr des von der Führungsfase abgenommenen Materials und zur erleichterten Ausbildung des Spanwinkels der Führungsfase. s

Insbesondere erstreckt sich die Hilfsspannut bis zu einem Durchmesser von 85% bis 90% des Bohrdurchmessers. Um ein Beispiel zu nennen, wurde bei einem Bohrwerkzeug mit 8,5 mm Bohrdurchmesser die Hilfsspannut so ausgebildet, dass sie sich bis zu einem Durchmesser von rund 7,5 mm erstreckte. Diese Tiefe entspricht rund 88% des Bohrdurchmessers.

Der Unterschied zwischen dem ersten Durchmesser an der ersten Fase, also an der Umfangsschneide, und dem Bohrdurchmesser ist bevorzugt über eine genutete Länge vorhanden und, weiter bevorzugt, dem Betrage nach konstant über die Länge seiner Ausbildung.

Erfindungsgemäß beträgt der Freiwinkel an der ersten Fase, also an der Fase an der Umfangsschneide, zwischen 5° und 15°. Weiter bevorzugt liegt der Freiwinkel bei 10° ± 2°.

Bevorzugt erstreckt sich die Freiwinkelfacette über einen Winkelbereich zwischen 8° und 16°, insbesondere über einen Winkelbereich 12° ± 2°. Die Erstreckung geht bei einer Betrachtung eines Querschnitts hervor. Der überstrichene Winkelbereich ist ein Maß für die Breite der Freiwinkelfacette.

Insbesondere ist die Freiwinkelfacette eben. Sie kann aber auch leicht konkav oder konvex gekrümmt sein.

Bevorzugt ist vorgesehen, dass die Führungsfase einen Spanwinkel - dem Betrage nach - zwischen 2° und 8° aufweist. Der Spanwinkel kann negative oder positive Werte einnehmen. Der Betrag (auch: "Absolutbetrag") im mathematischen Sinne wird üblicherweise durch die Operatoren || ausgedrückt. Der Betrag des Spanwinkels, also | Spanwinkel | , liegt bevorzugt zwischen 2° und 8°. Weiter bevorzugt liegt der Betrag des Spanwinkels bei 5°±2°, insbesondere bei 5°±1°.

Insbesondere für kleine Durchmesser (typischerweise ∅ < 6 mm) des Bohrwerkzeugs kann der Spanwinkel auch negative Werte annehmen.

Ein Spanwinkel wird zwischen einer Spanfläche und einer Werkzeug-Bezugsebene bestimmt. Nach Konvention gilt ein Spanwinkel von 0° als negativ.

Die Führungsfase weist einen Rundschliff auf, wodurch sie das Bohrwerkzeug vorteilhaft reibungsarm abstützen kann und zudem eine Glättung der Werkstückoberfläche erzielt. Zusätzlich aber ist die Führungsfase über den Spanwinkel schneidend ausgebildet. Die Führungsfase übernimmt daher aufgrund ihrer Anordnung und der besonderen Ausbildung mehrere Aufgaben.

Bevorzugt ist vorgesehen, dass eine Breite der Führungsfase zwischen 0,025 und 0,125 mal dem Bohrdurchmesser beträgt. Dieses Verhältnis gilt mit der Maßgabe, dass eine bestimmte absolute Breite der Führungsfase nicht unterschritten wird. Als günstiger Mindestbetrag für eine absolute Breite der Führungsfase kann bevorzugt 0,20 mm angesetzt werden.

Eine zu schmale Führungsfase bewirkt ein Rattern des Bohrwerkzeugs und ist nicht robust.

Auch ist aus Gründen der Reibung günstig, eine bestimmte absolute Breite der Führungsfase nicht zu überschreiten. Günstig ist es, wenn eine absolute Breite der Führungsfase unter 3,0 mm bleibt. Eine zu breite Führungsfase bewirkt eine zu große Kontaktfläche mit einer Bohrungswandung und verursacht dadurch mehr Reibung und höhere Kräfte.

Bevorzugt ist am Schneidrücken bezüglich der Drehrichtung hinter der Führungsfase keine weitere Fase oder Steg ausgebildet, da zusätzliche Reibung abträglich und unerwünscht ist.

Bevorzugt ist vorgesehen, dass eine Differenz zwischen dem ersten Durchmesser und dem Bohrdurchmesser zwischen 0,025 mm und 0,065 mm liegt. Weiter bevorzugt beträgt die Differenz zwischen dem ersten Durchmesser und dem Bohrdurchmesser 0,045 mm ± 0,010 mm, insbesondere bei 0,035 mm + 0,02 mm.

Die Differenz zwischen dem ersten Durchmesser und dem Bohrdurchmesser ist jener Betrag, welchen die Führungsfasen am Umfang zusammen abnehmen. Somit übernimmt bei einem zweinutigen Bohrwerkzeug bei einer Differenz zwischen dem ersten Durchmesser und dem Bohrdurchmesser von beispielsweise 0,030 mm jede der zwei Führungsfasen am Umfang einen Abtrag von 0,015 mm, also die Hälfte von 0,030 mm.

Eine zu große Differenz würde einen zu großen Materialabtrag pro Führungsfase erfordern. Eine zu geringe Differenz ist fertigungstechnisch aufwendig und bewirkt keine wirksame Entkopplung von Hauptschneide und Umfangsschneide. Ein absolutes Maß der Differenz zwischen dem ersten Durchmesser von 0,045 mm ± 0,01 mm hat sich als besonders vorteilhaft erwiesen.

Bevorzugt besteht die Differenz zwischen dem ersten Durchmesser und dem Bohrdurchmesser von Beginn der Umfangsschneiden über die gesamte genutete Länge hinweg.

Weiter bevorzugt ist die Differenz zwischen dem ersten Durchmesser und dem Bohrdurchmesser über die gesamte genutete Länge hinweg konstant.

Bevorzugt ist vorgesehen, dass sich der Bohrdurchmesser des Bohrwerkzeugs von der Spitze in Richtung Schaft verjüngt. Damit wird die Reibung im Bohrloch verringert. Eine Verjüngung beträgt üblicherweise zwischen 0,002 mm bis 0,05 mm pro 10 mm Länge. Besonders bevorzugt beträgt das Maß für die Verjüngung 0,03 mm pro 10 mm Länge.

Die Verjüngung wird typischerweise beim Rundschleifen eines Rohlings ausgebildet. Somit ist die Verjüngung auch auf allen Fasen mit einem Rundschliff vorhanden. Zur Klarstellung: das bedeutet, dass der von den Führungsfasen festgelegte Bohrdurchmesser über die Länge des Bohrwerkzeugs nicht eine konstante Größe hat, sondern sich eben nach dem Maß der Verjüngung reduziert.

Die oben diskutierte Differenz zwischen dem ersten Durchmesser und dem Bohrdurchmesser wird auch bei einer Verjüngung aufrechterhalten. Andernfalls würden sich ja erster Durchmesser und Bohrdurchmesser annähern.

Insbesondere für längere Werkzeuge, beispielsweise Werkzeuge einer Länge ≥ 6 x D, kann es vorgesehen sein, dass die schneidende Führungsfase sich nur über einen Teil der genuteten Länge erstreckt. So kann vorgesehen sein, dass die Führungsfase von der Spitze aus betrachtet, sich nur bis zu einer ersten Länge von 2 x D bis 4 x D erstreckt. Besonders bevorzugt erstreckt sich die Führungsfase bis zu einer ersten Länge zwischen 3,2 x D bis 3,8 D, insbesondere um 3,5 x D

Diese Weiterbildung ist freilich auch für kürzere Bohrwerkzeuge realisierbar, aber bei längeren Werkzeugen besonders nützlich. Denn es ist damit der Vorteil verbunden, dass bei solchen Bohrwerkzeugen eine geringere Reibung zur Bohrungswandung auftritt. Schließlich ist ja der Bohrdurchmesser in einem Werkstück bereits von dem Abschnitt mit den daran ausgebildeten schneidenden Führungsfasen geschaffen, und der daran anschließende Bereich des Bohrwerkzeugs ohne Führungsfasen geht frei.

Es kann vorgesehen sein, dass die Führungsfase entlang einer ersten Länge ausgebildet ist, an welche erste Länge in Richtung Schaft eine zweite Länge anschließt, entlang welcher anstelle der ersten Fase (mit Freiwinkel-Schliff) an der Umfangsschneide eine weitere Führungsfase ausgebildet ist. Die weitere Führungsfase trägt einen Rundschliff.

Die erste und die zweite Länge sind Abschnitte der genuteten Länge. Entlang der genuteten Länge sind Spannuten eingebracht.

Es ist nun so, dass die auf den Schneidrücken liegenden, schneidenden Führungsfasen ihre Aufgabe vorwiegend in einem in Längsrichtung vorderen (also spitzennahen) Bereich des Bohrwerkzeugs erfüllen. Daher verlieren die Führungsfasen auf den Schneidrücken mit zunehmendem Abstand von der Spitze tendenziell ihre Funktion als die auf Durchmesser schneidende Fasen. Gemäß der Weiterbildung ist also vorgesehen, dass die auf den am Schneidrücken liegenden, schneidenden Führungsfasen nach einer ersten Länge auslaufen. Damit weiterhin eine Führung des Werkzeugs gewährleistet ist, wird entlang einer daran anschließenden zweiten Länge an der Umfangsschneide statt der bislang dort ausgebildeten ersten Fase mit Freiflächenschliff eine weitere Führungsfase mit einem Rundschliff ausgebildet. Damit ist immer eine Führung des Bohrers durch eine vollrunde Führungsfase garantiert.

Bevorzugt besteht ein Überlappungsbereich, in welchem der Wechsel von der Führungsfase am Schneidrücken auf die Führungsfase an der Umfangsschneide erfolgt. Der Überlappungsbereich kann beispielsweise ein Viertel x D lang sein. Günstig ist ein sanftes Auslaufen der Führungsfase am Schneidrücken.

Diese Weiterbildung ist besonders interessant für Bohrwerkzeuge für tiefe Bohrungen, zum Beispiel genutete Längen von größer 6 x D, mit D dem Bohrdurchmesser.

Würde man bei Bohrwerkzeugen für tiefe Bohrungen die erste, scharf geschliffene Führungsfase über den gesamten genuteten Bereich hinweg ausbilden, bestünde bei ungünstigen Betriebsbedingungen sogar die Gefahr, dass der Bohrer am Durchmesser "einhakt" und die Bohrungsoberfläche beschädigt und / oder sogar das Bohrwerkzeug bricht.

Der Bohrdurchmesser ist stets von einer vollrunden Führungsfase gegeben. Entlang der ersten Länge mit Führungsfasen an den Schneidrücken ist der Bohrdurchmesser durch diese schneidenden Führungsfasen festgelegt. Entlang der axial daran anschließenden zweiten Länge liegen die unmittelbar an der Umfangsschneide ausgebildeten Führungsfasen auf Bohrdurchmesser.

Auch bei dieser Weiterbildung ist bevorzugt vorgesehen, dass sich das Bohrwerkzeug von Spitze in Richtung Schaft verjüngt. Der Bohrdurchmesser bei einem sich verjüngenden Bohrwerkzeug ist daher keine konstante Größe.

Die Hauptschneide weist mehrere Hauptschneidenabschnitte auf.

In einem zentrumsnahen Bereich besteht eine Ausspitzung. Radial nach außen schließt daran ein vorzugsweiser gerader Hauptschneidenabschnitt an.

Daran schließt ein Übergangsbereich an, entlang welchem die Hauptschneide in die Umfangsschneide übergeht. Der Übergangsbereich kann beispielsweise als Fase oder bevorzugt als Radius-Übergang ausgebildet sein.

Ein Radius-Übergang ist vorteilhaft gegenüber scharfkantigen Übergängen insofern er robuster gegenüber Ausbrüchen und Verschleiß ist.

Besonders bevorzugt ist eine Wahl eines Radius für den Radius-Übergang zwischen 0,028 x D und 0,088 x D mit Bohrdurchmesser D. Weiter bevorzugt liegt der Radius für den Radius-Übergang bei 0,058 ±0,005 x D.

Bevorzugt weist die Hauptschneide einen geraden Hauptschneidenabschnitt auf. Mit "gerade" ist gemeint, dass der betreffende Hauptschneidenabschnitt in einer Seitenansicht eine gerade Strecke bildet.

Eine alternative Ausgestaltung des zwischen Ausspitzung und Übergangsbereich liegenden Hauptschneidenabschnitts kann in einer gekrümmten, insbesondere konvexen Form liegen. Solche balligen Ausgestaltungen der Hauptschneiden sind für Gussbohrer vorgeschlagen worden, da sie eine Länge der Hauptschneide vergrößern.

Gegenüber einer gekrümmten Form sind gerade Hauptschneiden jedoch schnittfreudiger. Ferner kann die Form des Bohrungsgrundes bei nicht-geraden Hauptschneiden für Folgeoperationen nachteilig sein.

Bevorzugt weist das Bohrwerkzeug einen Spitzenwinkel zwischen 130° und 140° auf, weiter bevorzugt einen Spitzenwinkel von 135° ± 2° auf.

Ein Spitzenwinkel der genannten Größe, insbesondere um 135° ± 2°, verleiht dem Bohrwerkzeug besonders ausgewogene Eigenschaften: bei kleineren Spitzenwinkeln wird ein Zentrum des Bohrwerkzeugs empfindlich, bei größeren Spitzenwinkeln werden die Schneidenecken anfälliger für Ausbrüche.

Ein Rundschliff bedeutet im Zusammenhang mit der Ausgestaltung einer Fase, dass ein Rücken einer Fase einen Zylinderabschnitt bildet. Eine andere Bezeichnung für diesen Schliff ist "vollrund" oder zylindrisch. Im Falle der hier diskutierten Führungsfase bildet der Rücken einen Zylinderabschnitt mit dem Bohrdurchmesser als Durchmesser. In aller Regel ist bei einer Fase mit Rundschliff einfach die Mantelfläche eines rundgeschliffenen Rohlings erhalten, während die übrigen Geometrien des Werkzeugs abtragend (durch Schleifen) erzeugt sind.

Bevorzugt sind die Umfangsschneide und die an der Führungsfase ausgebildete Schneide über ihre jeweilige Erstreckung hinweg kontinuierlich ausgebildet. Damit ist gemeint, dass die Schneide bevorzugt frei von Einkerbungen, Wellen, Schrupp-Profilen oder anderen Unterbrechungen ist. Diese Weiterbildung betont eine Ausgestaltung des Bohrwerkzeugs derart, dass die am schneidende Führungsfase am Schneidrücken in einem ununterbrochenen Schnitt einen gleichmäßig dünnen Span abträgt.

In den Ausführungen überwiegend im Singular erklärt, ist es freilich bevorzugt und die Regel, dass bei mehrnutigen Werkzeugen an sämtlichen Umfangsschneiden und Schneidrücken die ersten Fasen bzw. die Führungsfasen so ausgeführt sind wie beschrieben.

Insbesondere ist das Bohrwerkzeug als Schaftbohrer ausgebildet.

Bevorzugt ist das Bohrwerkzeug aus einem Verbundwerkstoff umfassend wenigstens einen Hartstoff und wenigstens eine Binderphase ausgebildet. Insbesondere ist das Werkzeug aus Hartmetall gefertigt. Unter Hartmetall (engl. *cemented carbide*) wird vorliegend ein Verbundwerkstoff verstanden, bei dem harte Teilchen, die insbesondere durch Karbide, Karbonitride und/oder Oxokarbonitride der Elemente der Gruppen IVb bis VIb des Periodensystems der Elemente gebildet sein können, in einer duktilen metallischen Matrix eingebettet sind, die insbesondere aus Co, Ni, Fe oder einer Legierung von diesen gebildet sein kann. In den meisten Fällen sind die harten Teilchen dabei zumindest überwiegend durch Wolframkarbid gebildet und die metallische Matrix besteht im Wesentlichen aus Kobalt.

Bevorzugt ist das Bohrwerkzeug als Vollhartmetall-Bohrer ausgebildet und bevorzugt einstückig ausgeführt. Alternativ kann das Werkzeug - beispielsweise durch Zusammensintern - aus zwei oder mehreren Abschnitten gefügt sein.

Im Inneren des Bohrwerkzeugs können vorzugsweise Kühlmittelkanäle ausgebildet sein.

Schutz wird auch begehrt für eine Verwendung des Bohrwerkzeugs zur Bearbeitung verschleißfördernder Werkstoffe, insbesondere von Gusswerkstoffen. Unter "verschleißfördernd" ist gemeint, dass die betreffenden Werkstoffe besonders schwierig zu bearbeiten sind und insbesondere einen abrasiven Verschleiß von Werkzeugen verursachen. Unter Gusswerkstoffen sind im Rahmen der Anmeldung metallische Gusswerkstoffe gemeint, insbesondere schwer zerspanbare Eisen-Gusswerkstoffe wie etwa Grauguss, oder auch Gusseisen mit Vermiculargraphit. Beispiele für Gusseisen mit Kugelgraphit sind etwa die Werkstoffe EN-JS1030 und EN-JS1070.

### Beispiel:

Die Erfindung soll an einem Beispiel mit konkreten Maßen illustriert werden, die keineswegs beschränkend aufzufassen sind. Das Werkzeug wies ausgezeichnete Standzeiten und geringen Verschleiß bei der Bearbeitung von Gusswerkstoffen (hier am Beispiel EN-GJS-700-2 / GGG-70 0.7070) auf. An einem Vollhartmetall-Bohrwerkzeug mit einem Nenndurchmesser von 8,5 mm wurde der an der Umfangsschneide anliegende Durchmesser auf 0,03 mm kleiner als der Nenndurchmesser gesetzt. Der Freiwinkel der an den Umfangsschneiden liegenden ersten Fasen wurde mit 10°±1° gewählt. Die Breite der als ebene Facetten ausgeführten ersten Fasen lag bei 0,64 mm ±0,1mm. Die vollrunden Führungsfasen am Schneidrücken liegen auf Nenndurchmesser. Daraus ergab sich für das vorliegende zweinutige Bohrwerkzeug des Beispiels, dass die Führungsfasen so ausgeführt sind, dass sie am Umfang jeweils 0,015 mm an Material an der Bohrungswandung abtragen. Die Führungsfasen waren jeweils 30° versetzt gegenüber den Umfangsschneiden angeordnet.

Die vollrunden Führungsfasen an den Schneidrücken wiesen einen Spanwinkel von +5°±1° auf. Die Breite der Führungsfasen lag bei 0,64 mm. Bei der Messung der Breite der vollrunden Führungsfasen wurde die Sehnenlänge als Breite bestimmt. Der Übergang der Hauptschneide in die Umfangsschneide war als Radiusübergang mit einem Radius von 0,5 mm ± 0,05 mm ausgeführt.

Der Spitzenwinkel betrug 135° ±1°, der Spiralwinkel 30°.

Die genutete Länge betrug 61 mm, das sind rund 7 x D.

Weitere Vorteile und Zweckmäßigkeiten der Erfindung ergeben sich anhand der nachfolgenden Beschreibung von Ausführungsbeispielen unter Bezugnahme auf die beigefügten Figuren. Von den Figuren zeigen:
- Fig. 1:: ein Bohrwerkzeug in einer Seitenansicht in einem ersten Ausführungsbeispiel
- Fig. 2:: ein Detail eines Bohrwerkzeugs nach einem weiteren Ausführungsbeispiel
- Fig. 3a, 3b: Querschnitte eines Bohrwerkzeugs von Figur 2
- Fig. 4: ein Bohrwerkzeug in einem weiteren Ausführungsbeispiel
- Fig. 5: ein Querschnitt eines Bohrwerkzeugs Figur 4

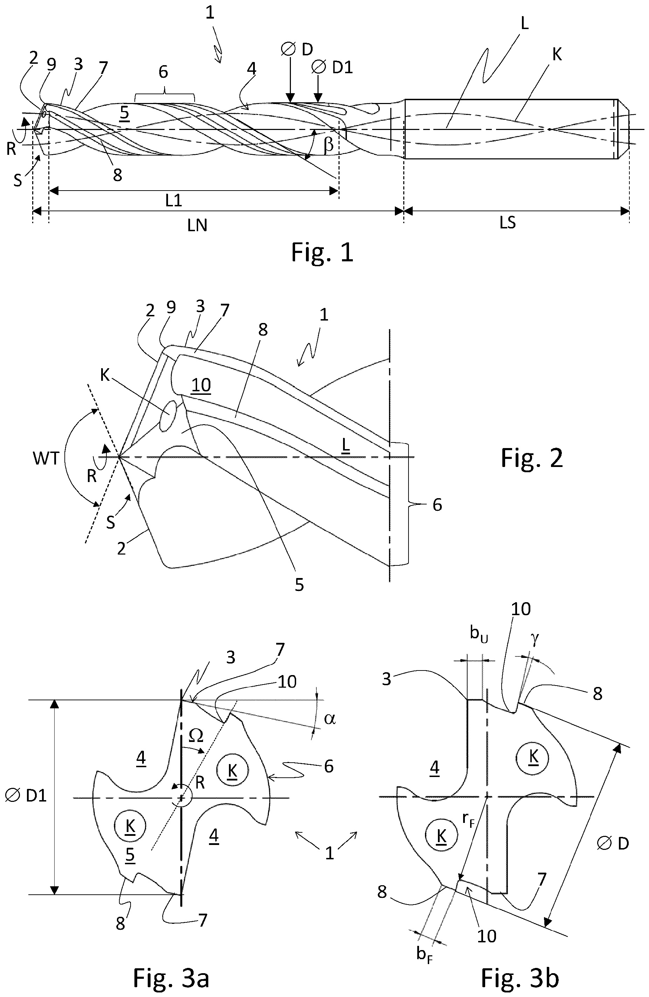

Figur 1 zeigt ein erfindungsgemäßes Bohrwerkzeug 1 in einem ersten Ausführungsbeispiel in einer Seitenansicht. Das Bohrwerkzeug 1 weist eine Gesamtlänge auf, welche sich in eine genutete Länge LN und einen Schaftabschnitt einer Länge LS gliedert.

Das Bohrwerkzeug 1 weist eine Bohrerlängsachse L auf, um welche das Bohrwerkzeug 1 drehbar ist. Das vorliegende Bohrwerkzeug 1 ist für einen rechtsdrehenden Betrieb der Drehrichtung R bestimmt. Richtungsangaben entlang der oder parallel zur Bohrerlängsachse L werden als "axial" bezeichnet, Richtungsangaben normal dazu als "radial".

Das Bohrwerkzeug 1 dieses Ausführungsbeispiels weist zwei gegenüber der Bohrerlängsachse L in einem Drallwinkel verdrallt verlaufenden Spannuten 4 auf. Eine solche zwei-nutige Konfiguration ist bevorzugt.

Die Spannuten 4 jeweils von einem Steg 5 beabstandet. An einer Mantelfläche eines Stegs 5 ist ein Schneidrücken 6 ausgebildet. In den Stegen 5 sind im Ausführungsbeispiel spiralförmig verlaufende Kühlmittelkanäle K ausgebildet. An einer Spitze S (auch: Stirn) des Bohrwerkzeugs 1 sind zwei Hauptschneiden 2 ausgebildet, welche jeweils entlang eines Übergangsbereiches 9 in eine Umfangsschneide 3 übergehen. Der Übergangsbereich 9 ist hier als Radiusübergang ausgeführt, was zur Vermeidung von Ausbrüchen an Schneidenecken günstig ist.

An den Umfangsschneiden 3 ist jeweils eine erste Fase 7 mit einem Freiwinkelschliff ausgebildet, wobei die Umfangsschneiden 3 an einem Durchmesser D1 liegen, der kleiner ist als der Bohrdurchmesser D.

An den Schneidrücken 6 ist jeweils eine den Bohrdurchmesser D festlegende Führungsfase 8 mit einem Rundschliff ausgebildet.

Theoretisch könnte die besondere Ausprägung der Schneidrücken 6, nämlich die Ausbildung einer ersten Fase 7 mit einem Freiwinkelschliff an einem Durchmesser D1 und - in Drehrichtung R dahinterliegend - eine den Bohrdurchmesser D festlegende Führungsfase 8 mit einem Rundschliff, lediglich an einem Schneidrücken 6 erfolgen, oder an Schneidrücken 6 unterschiedlich sein, doch ist es besonders bevorzugt, dass die Schneidrücken 6 hinsichtlich der Ausbildung der ersten Fasen 7 und der Führungsfasen 8 gleich sind.

Ersichtlich folgen die ersten Fasen 7 und die Führungsfasen 8 spiralförmig dem Verlauf der Spannuten 4. Anders ausgedrückt verlaufen die ersten Fasen 7 und die Führungsfasen 8 zu dem gleichen Winkel zur Bohrerlängsachse L wie der Drallwinkel β. Damit bewahren die Führungsfasen 8 den Abstand zu den Umfangsschneiden 3 bzw. den ersten Fasen 7.

Die erste Fase 7 und die Führungsfase 8 sind entlang einer ersten Länge L1 von der Spitze in Richtung Schaft ausgebildet. Im vorliegenden Ausführungsbeispiel entspricht die erste Länge L1 im Wesentlichen (über rund 90%) der gesamten genuteten Länge LN, bis auf eine Länge der Spitze S und eine Länge eines Auslaufbereichs der Nuten 4.

Wie hier dargestellt und bevorzugt setzt die Führungsfase 8 unmittelbar hinter dem Bereich der Spitze S des Bohrwerkzeugs 1 ein, damit ein wirksamer Schutz der Schneidenecke gegeben ist.

Figur 2 zeigt einen Ausschnitt eines erfindungsgemäßen Bohrwerkzeugs 1 in einer Seitenansicht in vergrößerter Darstellung des Bereiches der Spitze S. Auch in diesem Ausführungsbeispiel verlaufen in den Stegen 5 spiralförmig Kühlmittelkanäle K, die an der Spitze S münden.

Im vorliegenden Ausführungsbeispiel weist das Bohrwerkzeug 1 einen Spitzenwinkel WT von 135° auf. Ein Spitzenwinkel WT zwischen 130° und 140° ist günstig, weiter bevorzugt ein Spitzenwinkel von 135° ± 2°. Diese Wahl verleiht dem Bohrwerkzeug besonders ausgewogene Eigenschaften hinsichtlich Länge der Hauptschneiden 2, Robustheit der Schneidenecken und bezüglich der erforderlichen Bearbeitungskräfte.

Die Hauptschneiden 2 gehen jeweils entlang eines Übergangsbereiches 9 in eine Umfangsschneide 3 über.

An den Stegen 5, genauer gesagt an den umfänglich daran ausgebildeten Schneidrücken 6 sind jeweils zwei Fasen ausgebildet: an den Umfangsschneiden 3 ist jeweils eine erste Fase 7 mit einem Freiwinkelschliff ausgebildet. Bezüglich der Drehrichtung R in Umfangsrichtung dahinter, also folgend, ist am gleichen Steg 5 eine den Bohrdurchmesser D festlegende Führungsfase 8 mit einem Rundschliff ausgebildet.

Die Verhältnisse gehen noch besser den folgenden Schnitten hervor.

Figuren 3a und 3b zeigen Querschnitte eines erfindungsgemäßen Bohrwerkzeugs 1 an der gleichen axialen Position innerhalb der ersten Länge L1 bei einer Blickrichtung von der Stirn S in Richtung Schaft. Dargestellt sind die gleichen Schnitte, die zur Verdeutlichung der geometrischen Gegebenheiten lediglich leicht (rund 10°) zueinander verdreht sind. Figuren 3a und 3b zeigen also die gleichen Elemente. Der Übersichtlichkeit halber sind nicht alle mehrfach vorkommenden Elemente mit Bezugszeichen versehen.

Das Bohrwerkzeug 1 weist zwei jeweils von einem Steg 5 beabstandete Spannuten 4 auf. In den Stegen 5 verlaufen Kühlmittelkanäle K. Die Stege 5 erstrecken sich bevorzugt über mehr als 90°, betrachtet man den Winkelbereich, der zwischen der Umfangsschneide 3 und dem Ende des Schneidrückens 6 überstrichen wird. Im vorliegenden Beispiel überstreichen die Stege 5 etwa 100°. Daraus ergibt sich das sogenannte Nut / Rücken Verhältnis. Bevorzugt liegt das Nut / Rücken Verhältnis, also das Verhältnis eines die Nuten überstreichenden Bogens zum den die Rücken überstreichenden Bogen von 40:60, weiter bevorzugt um 30:70. Damit ist ausgedrückt, dass die Schneidrücken 6 im Bogenmaß bevorzugt wenigstens 60% des Querschnitts ausmachen.

An den Schneidrücken 6 ist jeweils eine erste Fase 7 ausgebildet, welche den Umfangsschneiden 3 zugeordnet ist. Die erste Fase 7 weist einen

Freiwinkelschliff mit einem Freiwinkel α auf. Der Freiwinkelschliff bildet eine Freifläche, bevorzugt eine ebene Freiwinkelfacette.

Der Freiwinkel α liegt bevorzugt zwischen 5° und 15°. Im gezeigten Ausführungsbeispiel liegt der Freiwinkel α bei 10°, was eine besonders bevorzugte Wahl ist.

Bei einem Winkel Ω bezüglich der Drehrichtung R hinter - d.h. in Umfangsrichtung folgend - der Umfangsschneide 3 setzt die Führungsfase 8 mit einem Rundschliff ein. Der Winkel Ω liegt bevorzugt zwischen 20° und 40°, im vorliegenden Ausführungsbeispiel bei besonders bevorzugten 30°.

Indem die Umfangsschneiden 3 auf einem ersten Durchmesser D1 liegen, der kleiner ist als der Bohrdurchmesser D, und die darauf folgenden, schneidenden Führungsfasen 8 mit einem Rundschliff den Bohrdurchmesser D festlegen, wirken die Umfangsschneiden 3 als Vorschneider. Erst die Führungsfasen 8 mit Rundschliff am Schneidrücken schneiden eine Bohrungswandung auf den Bohrdurchmesse D. Damit wird eine Entlastung der Umfangsschneiden 3 und ein besonders sauber bearbeitete Bohrungswandung erzielt. Die Entlastung der Umfangsschneiden 3 ist besonders in einem vorderen Bereich des Bohrwerkzeugs 1 von Bedeutung, wo eine Überlagerung von Kräften auf Hauptschneiden 2 und Umfangsschneiden 3 stattfindet.

Eine Breite b_{U} einer ersten Fase 7 liegt bevorzugt zwischen 0,025 und 0,125 mal dem Bohrdurchmesser D. Im vorliegenden Ausführungsbeispiel liegt die Breite b_{U} einer ersten Fase 7 bei 7,5% des Bohrdurchmessers D, also bei 0,075 x D.

Bezüglich der Drehrichtung R vor der Führungsfase 8 ist eine Hilfsspannut 10 ausgebildet. Die Hilfsspannut 10 erlaubt besonders vorteilhaft eine Ausbildung eines Schliffes auf die Führungsfase 8, die ja schneidend ausgebildet ist. Die Hilfsspannut 10 dient zur Aufnahme und zum Abtransport von Spänen, welche von der schneidend ausgebildeten Führungsfase 8 abgetragen werden.

Die Hilfsspannut 10 erstreckt sich radial bis zu einem Vertiefungsradius r_{F}. Insbesondere erstreckt sich die Hilfsspannut 10 bis zu einem Durchmesser von 85% bis 90% des Bohrdurchmessers D. In anderen Worten beträgt der Vertiefungsradius r_{F} bevorzugt zwischen 85% bis 90% des halben Bohrdurchmessers D. Damit ist eine ausreichende Freistellung der Führungsfase 8 zur Anbringung des Spanwinkels sowie Platz zur Spanaufnahme gewährleistet.

Die Führungsfase 8 weist einen Spanwinkel γ auf, der bevorzugt zwischen 2° und 8° liegt. Im vorliegenden Ausführungsbeispiel liegt der Spanwinkel γ bei besonders bevorzugten 5°.

Die Führungsfase 8 weist einen Rundschliff auf, wodurch sie das Bohrwerkzeug 1 vorteilhaft abstützen kann und zudem eine Glättung einer Werkstückoberfläche erzielt. Der Rücken der Führungsfase 8 liegt also auf einem Zylinder mit dem Bohrdurchmessers D als Durchmesser.

Zusätzlich aber ist die Führungsfase 8 über einen (hier positiven) Spanwinkel γ schneidend ausgebildet.

Eine Breite b_{F} der Führungsfase 8 beträgt bevorzugt zwischen 0,025 und 0,125 mal Bohrdurchmesser D. Im vorliegenden Ausführungsbeispiel weist die Führungsfase 8 eine Breite b_{F} von 7,5% des Bohrdurchmessers D auf, liegt also bei 0,075 x D.

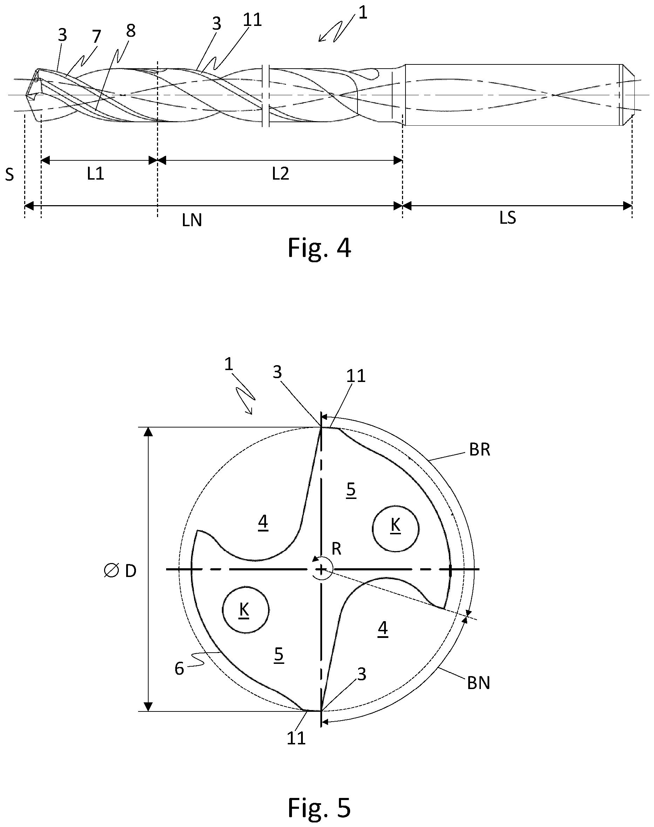

Figur 4 zeigt in einer Seitenansicht ein weiteres Ausführungsbeispiel der Erfindung. Hier gezeigt ist ein Bohrwerkzeug 1 für tiefe Bohrungen, mit einer genuteten Länge LN von größer 6 x D, mit D dem Bohrdurchmesser. Das Bohrwerkzeug 1 ist nicht in seiner gesamten Länge dargestellt, wie von den Unterbrechungslinien vermittelt. Über die erste Länge L1 hinweg sind die ersten Fasen 7 und die Führungsfasen 8 ausgeführt wie zuvor beschrieben. Gemäß der Weiterbildung nach Figur 4 ist vorgesehen, dass die schneidenden Führungsfasen 8 nach der ersten Länge L1 auslaufen. Eine typische Erstreckung der ersten Länge L1 liegt bei 2 x D bis 4 x D. Besonders bevorzugt erstreckt sich die Länge L1 mit Führungsfasen 8 zwischen 3,2 x D bis 3,8 D, insbesondere um 3,5 x D.

Damit weiterhin eine Führung des Werkzeugs gewährleistet ist, wird entlang einer daran anschließenden zweiten Länge L2 an der Umfangsschneide 3 statt der bislang dort ausgebildeten ersten Fase 7 mit Freiflächenschliff eine weitere Führungsfase 11 mit einem Rundschliff ausgebildet. Die an der Umfangsschneide 3 ausgebildete weitere Führungsfase 11 befindet sich dabei auf dem Bohrdurchmesser D. Es findet also ein Wechsel der Führung von den Führungsfasen 8 auf die weitere Führungsfasen 11 statt.

Es ändert sich die Ausprägung der Fase an der Umfangsschneide 3 von der ersten Fase 7 mit Freiflächenschliff in eine weitere Führungsfase 11 mit Rundschliff.

Bevorzugt besteht ein Überlappungsbereich zwischen der ersten länge L1 und der zweiten Länge L2, in welchem der Wechsel von der Führungsfase 8 am Schneidrücken auf die sekundäre Führungsfase 11 an der Umfangsschneide 3 erfolgt. Der Überlappungsbereich kann beispielsweise ein Viertel x D lang sein.

Figur 5 zeigt einen Querschnitt des Bohrwerkzeugs 1 nach Figur 4 im Bereich der zweiten Länge L2. An den Umfangsschneiden 3 sind die weiteren Führungsfasen 11 ausgebildet, welche sich auf Bohrdurchmesser D befinden. Eine Breite der weiteren Führungsfasen 11 liegt bevorzugt im Bereich der Führungsfasen 8 von der ersten Länge L1.

Die weiteren Führungsfasen 11 sind insbesondere nicht schneidend ausgebildet. In dem Schnitt der Figur 5 ist auch dargestellt, wie das zuvor erwähnte Nut/Rücken-Verhältnis bestimmt wird. Ein die Spannut 4 überstreichender Bogen BN in Grad gibt das Maß für den Anteil der Spannut 4. Ein den Schneidrücken 6 überstreichender Bogen BR in Grad gibt das Maß für den Anteil des Schneidrückens 6. Zusammen ergeben die Abschnitte 180°. Die Anteile in Prozent ausgedrückt ergeben das Nut/Rücken-Verhältnis, welches in diesem bevorzugten Beispiel bei rund 40:60 liegt.

### Liste von Bezugszeichen:

- 1: Bohrwerkzeug / 2 Hauptschneide / 3 Umfangsschneide
- 4: Spannut / 5 Steg / 6 Schneidrücken
- 7: erste Fase
- 8: Führungsfase
- 9: Übergangsbereich
- 10: Hilfsspannut
- 11: weitere Führungsfase

## Patentansprüche

1. Bohrwerkzeug mit
- einer Bohrerlängsachse (L), um die das Bohrwerkzeug (1) in einer Drehrichtung (R) drehbar ist und entlang welcher Bohrerlängsachse (L) sich eine genutete Länge (LN) erstreckt,
- wenigstens zwei Hauptschneiden (2) und wenigstens zwei Umfangsschneiden (3), wobei eine Hauptschneide (2) entlang eines Übergangsbereiches (9) in eine Umfangsschneide (3) übergeht,
- wenigstens zwei Spannuten (4), welche Spannuten (4) jeweils von einem Steg (5) beabstandet sind,
- einem an einer Mantelfläche eines Stegs (5) ausgebildeten Schneidrücken (6),
wobei entlang der genuteten Länge (LN) zumindest abschnittsweise an der Umfangsschneide (3) eine erste Fase (7) mit einem Freiwinkelschliff ausgebildet ist, welche Umfangsschneide (3) an einem ersten Durchmesser (D1) ausgebildet ist, welcher erste Durchmesser (D1) kleiner ist als der Bohrdurchmesser (D), **dadurch gekennzeichnet, dass**
- auf dem Schneidrücken (6) bezüglich der Drehrichtung (R) nach der ersten Fase (7) eine den Bohrdurchmesser (D) festlegende, gegenüber der ersten Fase (7) um einen Winkel von 20° bis 40° versetzte Führungsfase (8) mit einem Rundschliff ausgebildet ist, wobei bezüglich der Drehrichtung (R) vor der Führungsfase (8) eine Hilfsspannut (10) ausgebildet ist,
- und wobei die erste Fase (7) einen Freiwinkel (α) zwischen 5° und 15 ° aufweist.

2. Bohrwerkzeug nach Anspruch 1, wobei eine Breite (b_{U}) der ersten Fase (7) zwischen 0,025 und 0,125 mal Bohrdurchmesser (D) beträgt.

3. Bohrwerkzeug nach einem der vorangegangenen Ansprüche, wobei die Führungsfase (8) einen Betrag eines Spanwinkels zwischen 2° und 8° aufweist.

4. Bohrwerkzeug nach einem der vorangegangenen Ansprüche, wobei eine Breite (b_{F}) der Führungsfase (8) zwischen 0,025 und 0,125 mal Bohrdurchmesser (D) beträgt.

5. Bohrwerkzeug nach einem der vorangegangenen Ansprüche, wobei eine Differenz zwischen dem ersten Durchmesser (D1) und dem Bohrdurchmesser (D) zwischen 0,025 mm und 0,065 mm beträgt.

6. Bohrwerkzeug nach einem der vorangegangenen Ansprüche, wobei die Führungsfase (8) entlang einer ersten Länge (L1) ausgebildet ist, welche erste Länge (L1) kleiner ist als eine genutete Länge (LN) des Bohrwerkzeugs (1).

7. Bohrwerkzeug nach einem der vorangegangenen Ansprüche, wobei die Führungsfase (8) entlang einer ersten Länge (L1) ausgebildet ist, an welche in Richtung Schaft eine zweite Länge (L2) anschließt, entlang welcher anstelle der ersten Fase (7) an der Umfangsschneide eine weitere Führungsfase (11) mit Rundschliff ausgebildet ist.

8. Verwendung eines Bohrwerkzeug nach einem der vorangegangenen Ansprüche zur Bearbeitung von Gusswerkstoffen.

## Claims

1. Drilling tool with
- a drill longitudinal axis (L) about which the drilling tool (1) is rotatable in a direction of rotation (R) and along which drill longitudinal axis (L) a fluted length (LN) extends
- at least two main cutting edges (2) and at least two peripheral cutting edges (3), with a main cutting edge (2) transitioning into a peripheral cutting edge (3) along a transition area (9)
- at least two flutes (4), which are each spaced from a web (5),
- a land (6) formed on a lateral surface of a web (5),
wherein along the fluted length (LN), at least in sections, a first chamfer (7) with a clearance angle cut is formed on the peripheral cutting edge (3), which peripheral cutting edge (3) is formed on a first diameter (D1), which first diameter (D1) is smaller than the bore diameter (D),
**characterized in that**
- on the cutting land (6), with respect to the direction of rotation (R), after the first bevel (7), a margin (8) with a circular grind is formed, determining the drill diameter (D), offset by an angle of 20° to 40° relative to the first bevel (7), wherein an auxiliary flute (10) is formed before the margin (8) with respect to the direction of rotation (R),
- and wherein the first chamfer (7) has a clearance angle (α) of between 5° and 15°.

2. Drilling tool according to claim 1, wherein a width (bu) of the first bevel (7) is between 0.025 and 0.125 times the drilling diameter (D)

3. Drilling tool according to one of the preceding claims, wherein the margin (8) has an amount of a rake angle between 2 and 8 .

4. Drilling tool according to one of the preceding claims, wherein a width (b_{F}) of the margin (8) is between 0.025 and 0.125 times the drilling diameter (D).

5. Drilling tool according to one of the preceding claims, wherein a difference between the first diameter (D1) and the drilling diameter (D) is between 0.025 mm and 0.065 mm

6. Drilling tool according to one of the preceding claims, wherein the margin (8) is formed along a first length (L1), which first length (L1) is smaller than a grooved length (LN) of the drilling tool (1).

7. Drilling tool according to one of the preceding claims, wherein the margin (8) is formed along a first length (L1), which is adjoined in the direction of the shank by a second length (L2), along which, instead of the first margin (7) on the peripheral cutting edge, a further margin (11) with a round cut is formed.

8. Use of a drilling tool according to one of the preceding claims for machining cast materials.

## Revendications

1. Outil de forage avec
- un axe longitudinal de foret (L) autour duquel l'outil de forage (1) peut tourner dans une direction de rotation (R) et le long duquel axe longitudinal de foret (L) s'étend une longueur rainurée (LN),
- au moins deux arêtes tranchantes principales (2) et au moins deux arêtes tranchantes périphériques (3), une arête tranchante principale (2) se transformant en une arête tranchante périphérique (3) le long d'une zone de transition (9),
- au moins deux rainures à copeaux (4), lesquelles rainures à copeaux (4) sont chacune espacées par une entretoise (5),
- un dos de coupe (6) réalisé sur une surface d'enveloppe d'une entretoise (5),
un premier chanfrein (7) avec un affûtage d'angle de dépouille étant réalisé le long de la longueur rainurée (LN) au moins par sections sur l'arête tranchante périphérique (3), laquelle arête tranchante périphérique (3) est réalisée sur un premier diamètre (D1), lequel premier diamètre (D1) est plus petit que le diamètre de forage (D), **caractérisé en ce que**
- sur le dos de coupe (6) est réalisé, par rapport à la direction de rotation (R), après le premier chanfrein (7), un chanfrein de guidage (8) définissant le diamètre de forage (D), décalé d'un angle de 20° à 40° par rapport au premier chanfrein (7), avec un affûtage circulaire, une rainure à copeaux auxiliaire (10) étant réalisée avant le chanfrein de guidage (8) par rapport à la direction de rotation (R),
- et le premier chanfrein (7) présentant un angle de dépouille (a) compris entre 5° et 15°.

2. Outil de forage selon la revendication 1, dans lequel une largeur (b_{U}) du premier chanfrein (7) est comprise entre 0,025 et 0,125 fois le diamètre de forage (D).

3. Outil de forage selon l'une quelconque des revendications précédentes, dans lequel le chanfrein de guidage (8) présente une valeur d'angle d'attaque comprise entre 2° et 8°.

4. Outil de forage selon l'une quelconque des revendications précédentes, dans lequel une largeur (b_{F}) du chanfrein de guidage (8) est comprise entre 0,025 et 0,125 fois le diamètre de forage (D).

5. Outil de forage selon l'une quelconque des revendications précédentes, dans lequel une différence entre le premier diamètre (D1) et le diamètre de forage (D) est comprise entre 0,025 mm et 0,065 mm.

6. Outil de forage selon l'une quelconque des revendications précédentes, dans lequel le chanfrein de guidage (8) est réalisé le long d'une première longueur (L1), laquelle première longueur (L1) est inférieure à une longueur rainurée (LN) de l'outil de forage (1).

7. Outil de forage selon l'une quelconque des revendications précédentes, dans lequel le chanfrein de guidage (8) est réalisé le long d'une première longueur (L1), à laquelle se raccorde, en direction de la tige, une deuxième longueur (L2) le long de laquelle un autre chanfrein de guidage (11) est réalisé avec un affûtage circulaire à la place du premier chanfrein (7) sur l'arête tranchante périphérique.

8. Utilisation d'un outil de forage selon l'une quelconque des revendications précédentes pour l'usinage de matériaux de fonderie.
